# FASCICULE DE BREVET EUROPEEN

(11) **EP 4 359 284 B1**
(45) Date de publication et mention de la délivrance du brevet: **25.06.2025**
(21) Numéro de dépôt: 22731726.0
(22) Date de dépôt: 12.05.2022
(51) Int. Cl.: B62D 25/02, B62D 25/08, B62D 21/15, B60R 22/24

(54) **ÉLÉMENT DE DOUBLURE INTÉRIEURE DE VÉHICULE AUTOMOBILE**
KRAFTFAHRZEUGINNENVERKLEIDUNGSELEMENT
MOTOR VEHICLE INTERIOR LINING ELEMENT

(30) Priorité: 22.06.2021 FR 2106624
(43) Date de publication de la demande: 01.05.2024
(73) Titulaire: Stellantis Auto SAS, 78300 Poissy (FR)
(72) Inventeur: VOITOT, Jean, 25250 ONANS (FR); BENANE, Said, 94240 L HAY LES ROSES (FR)
(74) Mandataire: BCIP
(86) Numéro de dépôt international: PCT/FR2022/050907
(87) Numéro de publication internationale: WO 2022/269151

(56) Documents cités:
- EP-A1- 3 034 363
- FR-A1- 3 102 437
- JP-A- 2006 282 122

## Description

La présente invention revendique la priorité de la demande française 2106624 déposée le 22 juin 2021.

Le contexte technique de la présente invention est celui des véhicules automobiles, et plus particulièrement des éléments de carrosserie intérieur de véhicule automobile. Plus particulièrement, l'invention a trait à un élément de doublure intérieure pour véhicule automobile, destiné à être fixé solidairement entre un pilier arrière et un pilier central du véhicule automobile.

Dans l'état de la technique, un véhicule automobile comprend un pilier central et un pilier arrière entre lesquels, à l'extérieur du véhicule automobile, s'étend l'aile arrière et, à l'intérieur du véhicule automobile, s'étend un élément de doublure intérieur. Plus précisément, l'aile arrière s'étend au-dessus du passage d'une des roues arrière, jusqu'au pavillon de toit et l'élément de doublure intérieure se situe à l'intérieur de l'habitacle du véhicule automobile en recouvrant latéralement l'aile arrière et s'étend depuis le bas de caisse jusqu'au pavillon de toit ou jusqu'à une vitre arrière ou une vitre latérale de coffre lorsque celle-ci est présente.

Les éléments de doublure intérieure s'étendent depuis le pilier central jusqu'au pilier arrière du véhicule automobile et s'étendent en continu jusqu'au bas de caisse. Chaque élément de doublure intérieure pour véhicule automobile est conçu pour résister à des sollicitations. En effet, l'enrouleur d'une ceinture de sécurité est fixé dans une zone de fixation proche de l'élément de doublure intérieure et en cas de choc, une forte sollicitation, par exemple une tension de plus d'une tonne par enrouleur, est exercée depuis la zone de fixation vers l'avant du véhicule automobile. Afin de résister à une telle sollicitation, l'élément de doublure intérieure présente une taille et une épaisseur prédéterminées en fonction de la résistance souhaitée. Toutefois, en cas de choc plus violent ayant pour conséquence l'application d'une tension particulièrement forte sur l'élément de doublure intérieure, celui-ci doit pouvoir se déformer ou se briser de manière à éviter de générer des risques pour les passagers.

Le document EP3034363 décrit un véhicule selon le préambule de la revendication indépendante 1, comportant un élément de doublure intérieur fixé entre un pilier arrière et un pilier central dudit véhicule.

Dans un souci de réduction de masse totale du véhicule automobile, il devient nécessaire de réduire aussi la masse de l'élément de doublure intérieure et donc de fournir une solution qui soit tout aussi sécuritaire que l'existante et sans augmenter le nombre d'éléments à assembler.

La présente invention a pour objet de proposer un nouvel élément de doublure intérieure afin de répondre au moins en grande partie aux problèmes précédents et de conduire en outre à d'autres avantages.

Un autre but de l'invention est de proposer un élément de doublure intérieure pour véhicule automobile qui soit configuré pour limiter le nombre d'opérations nécessaires à son assemblage, de sorte à optimiser le temps de production dudit élément de doublure intérieure de véhicule automobile.

Un autre but de l'invention est de proposer un élément de doublure intérieure pour véhicule automobile qui soit universel et configuré pour s'adapter à différents véhicules automobiles.

Un autre but de l'invention est de proposer un élément de doublure intérieure pour véhicule automobile simple, tant du point de vue de sa mise en œuvre, que du point de vue de sa fabrication.

Un autre but de l'invention est de proposer un élément de doublure intérieure pour véhicule automobile qui soit peu onéreux, de sorte à limiter le coût d'un tel un élément de doublure intérieure pour véhicule automobile par rapport aux éléments de doublure intérieure de véhicule automobile existants.

Un autre but de l'invention est de proposer un élément de doublure intérieure pour véhicule automobile peu encombrant, garantissant la compacité et la légèreté du véhicule automobile.

Selon un premier aspect de l'invention, on atteint au moins l'un des objectifs précités avec un élément de doublure intérieure pour véhicule automobile destiné à être fixé solidairement entre un pilier arrière et un pilier central du véhicule automobile, l'élément de doublure intérieure comportant une tôle de couverture comportant un rabat supérieur destiné à être fixé solidairement à une structure du véhicule automobile s'étendant entre le pilier arrière et le pilier central, et un rabat inférieur destiné à être fixé solidairement à un passage de roue du véhicule automobile caractérisé en ce que l'élément de doublure intérieure comporte une zone d'amorçage située entre le rabat supérieur et le rabat inférieur, la zone d'amorçage prenant la forme d'une forme concave ménagée dans la tôle de couverture.

La zone d'amorçage est configurée pour localiser des contraintes mécaniques en cas de choc sur l'élément de doublure intérieure, conduisant à initier une déformation de l'élément de doublure intérieure au niveau de la zone d'amorçage. En particulier, la déformation de l'élément de doublure intérieure correspond à une rotation de l'élément de doublure intérieure vers l'intérieur du véhicule automobile.

La présence d'une telle zone d'amorçage autorise l'allègement de l'élément de doublure intérieure, afin de répondre au souhait de la réduction de masse totale du véhicule, tout en étant tout aussi sécuritaire que l'existante et sans augmenter le nombre d'éléments à assembler sur le véhicule automobile. Plus précisément, un tel élément de doublure intérieure est destiné à se déformer de manière contrôlée.

Dans l'élément de doublure intérieure conforme au premier aspect de l'invention, une forme concave correspond par exemple à un pli. Le terme « concave » a pour référentiel l'intérieur du véhicule, c'est-à-dire que la forme concave est vue du côté de l'habitacle du véhicule automobile. La forme concave est obtenue par emboutissage ou poinçonnage de la tôle de couverture.

Il est à noter qu'un élément de doublure est un élément qui vient recouvrir un autre élément. Le terme « intérieure » qualifiant la doublure fait référence à l'emplacement de la doublure par rapport au véhicule automobile, c'est-à-dire que la doublure se trouve dans l'habitacle du véhicule automobile. L'élément de doublure intérieure est destiné à être recouvert par un habillage intérieur après sa fixation au véhicule automobile.

L'élément de doublure intérieure conforme au premier aspect de l'invention comprend avantageusement au moins un des perfectionnements ci-dessous, les caractéristiques techniques formant ces perfectionnements pouvant être prises seules ou en combinaison :
- La tôle de couverture est une tôle métallique ;
- la forme concave comporte au moins une pliure traversant la zone d'amorçage. Autrement dit, la zone d'amorçage comprend au moins un angle de pliage définissant la forme concave.
- L'au moins une pliure est destinée à s'étendre selon une direction longitudinale du véhicule automobile, lorsque l'élément de doublure intérieure est fixé sur ledit véhicule automobile.
- L'élément de doublure intérieure comporte une jambe de force située à une extrémité périphérique de la tôle de couverture, la jambe de force comportant un élément de renfort mécanique configuré pour renforcer la tôle de couverture en cas d'effort de traction sur la tôle de couverture. La présence de l'élément de renfort mécanique permet d'éviter le déchirement de la tôle de couverture en cas de forte sollicitation mécanique. L'élément de renfort mécanique est par exemple un embouti ou une augmentation locale d'épaisseur.
- La jambe de force comporte une partie arrière dont un bord arrière forme un angle non nul avec un bord arrière d'une partie inférieure de la jambe de force, la partie inférieure étant destinée à être fixée solidairement au passage de roue.
- L'élément de renfort mécanique est ménagé sur la partie arrière de la jambe de force. Cela permet d'éviter un déchirement localisé dans cette partie.
- L'élément de renfort mécanique prend la forme d'un embouti ménagé au niveau d'une zone périphérique de la partie arrière de la jambe de force.
- L'embouti formant l'élément de renfort mécanique est délimité par le bord arrière de la partie arrière de la jambe de force.
- L'embouti prend la forme d'une zone polygonale débouchant sur le bord arrière de la partie arrière de la jambe de force.
- L'embouti prend la forme d'une ellipsoïde débouchant sur le bord arrière de la partie arrière de la jambe de force.
- L'élément de doublure intérieure comporte au moins une nervure de rigidification située en arrière de la zone d'amorçage et qui s'étend en direction de ladite zone d'amorçage. Une telle nervure de rigidification permet de rigidifier la tôle de couverture et d'améliorer son comportement, c'est-à-dire sa résistance au déchirement et/ou au flambement, en cas de choc sur l'élément de doublure intérieure.
- La nervure de rigidification a une forme rectiligne.
- La nervure de rigidification correspond à une surépaisseur de la tôle de couverture.
- La nervure de rigidification est située dans une portion supérieure de l'élément de doublure intérieure et/ou la nervure de rigidification est située dans une portion arrière de l'élément de doublure intérieure.
- La nervure de rigidification est située entre l'élément de renfort mécanique, tel que l'embouti, et la zone d'amorçage.

Selon un deuxième aspect de l'invention, il est proposé un véhicule automobile comportant : un habitacle délimité latéralement par un pilier central et un pilier arrière situé longitudinalement en arrière du pilier central ; et un élément de doublure intérieure conforme au premier aspect de l'invention ou selon l'un quelconque de ses perfectionnements, l'élément de doublure intérieure étant fixé solidairement à une structure du véhicule automobile entre le pilier central et le pilier arrière.

Dans le véhicule automobile conforme au deuxième aspect de l'invention, on comprend que la structure correspond à l'ossature du véhicule automobile. L'élément de doublure intérieure est situé dans l'habitacle du véhicule automobile.

Un tel véhicule automobile équipé d'un élément de doublure intérieure allégé par rapport à un élément de doublure de l'art antérieur présente une masse totale allégée, tout en étant équipé d'un élément de doublure intérieure tout aussi sécuritaire et dont la déformation est contrôlée.

Le véhicule automobile conforme au deuxième aspect de l'invention comprend avantageusement au moins un des perfectionnements ci-dessous, les caractéristiques techniques formant ces perfectionnements pouvant être prises seules ou en combinaison :
- l'élément de doublure intérieure est fixé solidairement à la structure du véhicule automobile par un premier organe de fixation situé au niveau du rabat supérieur ; et à un passage de roue du véhicule automobile par un deuxième organe de fixation situé au niveau du rabat inférieur.
- le premier organe de fixation et/ou le deuxième organe de fixation prend la forme d'un cordon de soudure. Complémentairement ou alternativement, le premier organe de fixation et/ou le deuxième organe de fixation comporte au moins un rivet passant au travers de la tôle de couverture et respectivement de la structure et du passage de roue du véhicule automobile.
- la zone d'amorçage est située en dessous d'une vitre arrière du véhicule automobile et en arrière d'un enrouleur de ceinture de sécurité pour un siège arrière du véhicule automobile. La vitre arrière est par exemple une vitre latérale de coffre.
- l'élément de doublure intérieure ménage une ouverture au niveau de la structure du véhicule automobile située entre le pilier arrière et le passage de roue, l'ouverture étant située en arrière de la jambe de force de l'élément de doublure intérieure, la partie inférieure de la jambe de force étant fixée solidairement à une zone arrière du passage de roue.
- préférentiellement, la partie inférieure de la jambe de force est fixée solidairement à une zone arrière du passage de roue par un cordon de soudure, alternativement ou complémentairement par rivetage.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique, de côté, d'un véhicule automobile conforme au deuxième aspect de l'invention ;
[Fig.2] illustre une vue schématique d'un élément de doublure intérieure fixé solidairement à la structure d'un véhicule automobile conforme au deuxième aspect de l'invention ;w
[Fig.3 illustre une vue schématique d'un élément de doublure intérieure pour véhicule automobile conforme au premier aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

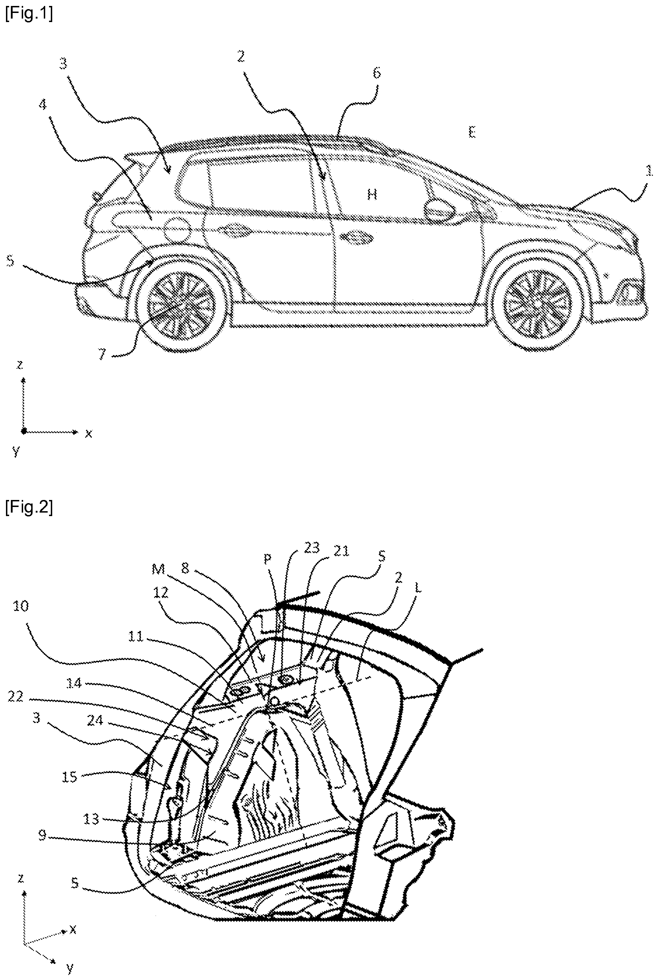

La FIGURE 1 montre un véhicule automobile 1 conforme au deuxième aspect de l'invention, vu de côté. Dans la suite de la description, on définit un référentiel dans lequel sont définis un axe longitudinal x, un axe transversal y et un axe vertical z. L'axe longitudinal x correspond à la trajectoire du véhicule automobile 1 lorsqu'il est en marche avant, en ligne droite et sur une route plate. L'axe longitudinal correspond à une direction allant de l'arrière vers l'avant du véhicule automobile 1, et il est orienté depuis l'arrière vers l'avant du véhicule automobile 1. On définit également une direction longitudinale parallèle à l'axe longitudinal x, les adjectifs « avant » et « arrière » se réfèrent à cette direction de référence, le terme « longueur » également. L'axe transversal y correspond à l'axe autour desquels les roues du véhicule automobile tournent, et le sens de l'axe y est orienté depuis le côté conducteur vers le côté passager, dans la norme non anglo-saxonne. On définit également une direction transversale parallèle à l'axe transversal y, et les adjectifs « latéral » ou « transversal » se réfèrent à cette direction de référence, le terme « largeur » également. L'axe vertical z est un axe perpendiculaire simultanément aux axes x et y et qui est orienté depuis le plancher du véhicule automobile vers son pavillon de toit, les adjectifs « supérieur » et « inférieur » se réfèrent à cette direction de référence, le terme « hauteur » également.

La FIGURE 1 montre que le véhicule automobile 1 comprend un pilier central 2 et un pilier arrière 3. Le pilier arrière 3 est situé longitudinalement en arrière du pilier central 2. L'habitacle H est délimité latéralement par le pilier central 2 et le pilier arrière 3. À l'extérieur E du véhicule automobile 1, s'étend l'aile arrière 4 entre le pilier central 2 et le pilier arrière 3. À l'intérieur H du véhicule automobile 1, s'étend un élément de doublure intérieure 10, visible en FIGURE 2, en recouvrement latéral de l'aile arrière 4. Plus précisément, l'aile arrière 4 s'étend au-dessus d'une des roues arrière 7, jusqu'au pavillon de toit 6 et l'élément de doublure intérieure 10, à l'intérieur de l'habitacle H du véhicule automobile 1, s'étend depuis un passage de roue 9 jusqu'au pavillon de toit 6 ou jusqu'à l'emplacement 8 pour une vitre arrière ou une vitre latérale de coffre lorsque celle-ci est présente.

La FIGURE 2 montre que l'élément de doublure intérieure 10 est fixé solidairement à une structure S du véhicule automobile 1, s'étendant entre le pilier central 2 et le pilier arrière 3. La structure S est aussi ce qu'on appelle l'ossature du véhicule automobile 1.

Plus particulièrement, l'élément de doublure intérieure 10 pour véhicule automobile 1 comprend une tôle de couverture 11 comportant un rabat supérieur 12 et un rabat inférieur 13. Afin d'obtenir les rabats 12, 13, la tôle de couverture 11, en sortie de fabrication à fait l'objet d'étapes de pliage. Le rabat supérieur 12 présente un angle de pliage de préférence obtus par rapport à un corps principal de la tôle de couverture 11 n'ayant pas subi d'étape de pliage, le rabat supérieur 12 ayant été obtenu par un pliage dans un premier sens de rotation, par exemple anti-horaire. Le rabat inférieur 13 présente un angle de pliage de préférence sensiblement perpendiculaire ou aiguë par rapport au corps principal de la tôle de couverture 11 n'ayant pas subi d'étape de pliage, le rabat inférieur 13 ayant été obtenu par un pliage dans un deuxième sens de rotation, inverse au premier sens de rotation, par exemple horaire.

Le rabat supérieur 12 est fixé solidairement à une portion d'un pourtour définissant l'emplacement 8 pour la vitre arrière ou la vitre latérale de coffre du véhicule automobile 1. Le rabat inférieur 13 est fixé solidairement à un passage de roue 9 du véhicule automobile 1. Le passage de roue 9 est un carénage intérieur derrière lequel les roues, ici les roues arrière 7, sont situées.

Chaque rabat 12, 13 épouse au moins en partie, ou en totalité, la forme de la structure S ou du passage 9 de roue sur lequel il est fixé, de manière à être plaqué contre la structure S ou le passage 9 de roue. Afin de suivre les formes arrondies du passage 9 de roue, le rabat inférieur 13 peut comprendre des découpes laissant apparaître les formes les plus arrondies du passage 9 de roue, ce qui facilite le plaquage du rabat inférieur 13 sur la structure S, et aussi le pliage de la tôle de couverture 11 pour obtenir le rabat inférieur 13. Bien entendu, le rabat supérieur 12 peut lui aussi comprendre des découpes adaptées pour épouser plus facilement les formes de la structure S sur laquelle il est fixé.

La tôle de couverture 11 est une tôle métallique. La fixation des rabats 12, 13 sur la structure S est réalisée par un organe de fixation pouvant prendre la forme d'un cordon de soudure et/ou d'un rivet traversant à la fois l'un des rabats 12, 13 et la structure S. Par exemple, le rabat supérieur 12 est fixé à la structure S, c'est-à-dire à la portion du pourtour définissant l'emplacement 8 pour la vitre arrière ou la vitre latérale de coffre du véhicule automobile 1, par rivetage. Le rabat inférieur 13 est lui fixé au passage de roue 9 du véhicule automobile 1 par un cordon de soudure déposé sur toute la longueur du rabat inférieur 13. A l'issue de la fixation de l'élément de doublure intérieure 10 sur la structure S du véhicule automobile 1, ce dernier est ensuite destiné à être recouvert par un habillage intérieur.

L'élément de doublure intérieure 10 comporte une portion avant 21 située vers l'avant du véhicule automobile 1 par rapport à un axe vertical médian M du passage 9 de roue et une portion arrière 22 située vers l'arrière du véhicule automobile 1 par rapport à ce même axe vertical médian M du passage 9 de roue. L'élément de doublure intérieure 10 comporte une portion supérieure 23 située au-dessus d'un point culminant P du passage 9 de roue et de sa projection longitudinale L et une portion inférieure 24 située en dessous du point culminant P du passage 9 de roue et de sa projection longitudinale L. Les portions avant 21, arrière 22, supérieure 23 et inférieure 24 peuvent aussi s'entendre par rapport à un centre de gravité de l'élément de doublure intérieure 10 et de sa projection longitudinale et verticale.

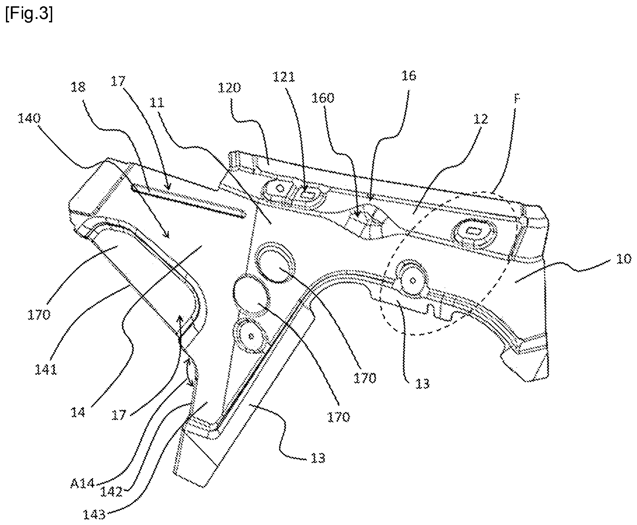

La FIGURE 3 montre que l'élément de doublure intérieure 10, notamment dans sa portion arrière 22, comporte une jambe de force 14, c'est-à-dire un élément de soutien en cas de forte sollicitation mécanique. La jambe de force 14 comporte une partie arrière 140 dont la tranche 141, aussi appelé bord arrière 141, forme un angle A14 non nul avec la tranche 142 d'une partie inférieure 143 de la jambe de force 14, la partie inférieure 143 étant destinée à être fixée solidairement au passage 9 de roue, notamment via le rabat inférieur 13.

Afin d'alléger l'élément de doublure intérieure 10 par rapport à un élément de doublure de l'art antérieur, l'élément de doublure intérieure 10 ménage une ouverture 15, qui empêche notamment la fixation de l'élément de doublure intérieure 10 au bas de caisse F, comme cela est montré en FIGURE 2. Autrement dit, l'ouverture 15 s'étend depuis le bas de caisse 5 jusqu'à atteindre la jambe de force 14. Plus particulièrement, l'ouverture 15 au niveau de la structure S du véhicule automobile 1 est située entre le pilier arrière 3 et le passage 9 de roue. Il est à noter qu'une fois l'élément de doublure intérieure 10 fixé à la structure S du véhicule automobile 1, le point culminant P du passage 9 de roue est toujours plus haut, que le point le plus haut de l'ouverture 15, la hauteur étant définie selon l'axe z. L'ouverture 15 est située en arrière de la jambe de force 14 de l'élément de doublure intérieure 10, la partie inférieure de la jambe de force 14 étant fixée solidairement à une zone arrière du passage 9 de roue. Préférentiellement, la partie inférieure 143 de la jambe de force 14 est fixée solidairement à la zone arrière du passage 9 de roue par un cordon de soudure et/ou par un rivet.

La FIGURE 3 montre que l'élément de doublure intérieure 10 comporte une zone d'amorçage 16 située entre le rabat supérieur 12 et le rabat inférieur 13. La zone d'amorçage est située dans la portion supérieure 23 de l'élément de doublure intérieure 10. La zone d'amorçage 16 prend la forme d'une forme concave ménagée dans la tôle de couverture 11. Sur l'exemple illustré, la forme concave est située sur le pli séparant le rabat supérieur 12 du corps principal de la tôle de couverture 11. Plus précisément, la partie la plus profonde de la zone d'amorçage est situé à la moitié de la ligne de pli séparant le corps principal de la tôle de couverture 11 et le rabat supérieur 12.

La zone d'amorçage 16 est configurée pour localiser des contraintes mécaniques en cas de choc sur l'élément de doublure intérieure 10, conduisant à initier une déformation de l'élément de doublure intérieure 10 au niveau de la zone d'amorçage 16. En particulier, la déformation de l'élément de doublure intérieure 10 correspond à une rotation de l'élément de doublure intérieure 10 vers l'intérieur du véhicule automobile 1. La présence d'une zone d'amorçage 16 autorise l'allègement de l'élément de doublure intérieure 10, afin de répondre au souhait de la réduction de masse totale du véhicule, tout en étant tout aussi sécuritaire que les solutions existantes et sans augmenter le nombre d'éléments à assembler sur le véhicule automobile 1. Plus précisément, un tel élément de doublure intérieure 10 comprenant cette zone d'amorçage est destiné à se déformer de manière contrôlée. L'élément de doublure intérieure 10 constitue donc une pièce de renfort qui limite les efforts sur les points de soudure/rivetage au niveau des rabats 12, 13 et en répartissant uniformément les efforts. En cas de choc arrière et de tension sur un enrouleur de ceinture de sécurité fixé dans une zone de fixation F, un tel l'élément de doublure intérieure 10 permet d'éviter un enfoncement de la caisse.

Lorsque l'élément de doublure intérieure 10 est fixé sur ledit véhicule automobile 1, la zone d'amorçage 16 est située en dessous d'une vitre arrière 8 du véhicule automobile 1. Plus particulièrement, la zone d'amorçage 16 est située en dessous de la vitre latérale 8 du coffre du véhicule automobile 1. La zone d'amorçage 16 est également située en arrière de la zone de fixation F de l'enrouleur de ceinture de sécurité d'un siège arrière du véhicule automobile 1, le terme arrière s'entendant selon l'axe longitudinal x défini précédemment. Ainsi, en cas de choc, la rotation de l'élément de doublure intérieure 10 ne risque pas de heurter un passager.

La forme concave correspond par exemple à un pli. Le terme « concave » a pour référentiel l'intérieur du véhicule automobile 1, c'est-à-dire que la forme concave est vue du côté de l'habitacle H du véhicule automobile 1. La forme concave est par exemple obtenue par emboutissage ou poinçonnage de la tôle de couverture 11. La forme concave comporte au moins une pliure 160 traversant la zone d'amorçage 16. Autrement dit, la zone d'amorçage 16 comprend au moins un angle de pliage définissant au moins une partie de la forme concave. La pliure s'étend selon une direction longitudinale du véhicule automobile 1, lorsque l'élément de doublure intérieure 10 est fixé sur ledit véhicule automobile 1. La forme concave est par exemple obtenue par plusieurs pliures 160.

Le rabat supérieur 12 comprend à son extrémité un rabat de plaquage 120 formant un angle de pliage de sensiblement 90° avec le rabat supérieur 12. Le rabat de plaquage 120 s'étend selon une direction verticale, en s'éloignant du corps principal de la tôle de couverture 11. Le rabat de plaquage 120 est destiné à être solidarisé à la structure S située au plus près d'un bord inférieur de la vitre arrière ou de la vitre latérale de coffre. Il est à noter que le rabat supérieur 12 comprend des lumières 121.

Afin de renforcer la tôle de couverture 11, notamment en cas d'effort de traction sur la tôle de couverture 11, l'élément de doublure intérieure 10 comporte un élément de renfort mécanique 17. L'élément de renfort mécanique 17 est par exemple un embouti 170 ou une augmentation locale d'épaisseur. La présence de l'élément de renfort mécanique 17 permet d'éviter le déchirement de la tôle de couverture 11 en cas de forte sollicitation mécanique. L'embouti 170 est situé à une extrémité périphérique de la tôle de couverture 11. De préférence, les éléments de renfort mécanique 17 sont situés dans la jambe de force 14.

Selon l'exemple illustré, l'élément de renfort mécanique 17 est ménagé sur la portion arrière 22 de l'élément de doublure intérieure 10 et plus particulièrement sur une périphérie extérieure de la jambe de force 14. En effet, un embouti 170 est ménagé au niveau d'une zone périphérique de la partie arrière 140 de la jambe de force 14. Ainsi, l'embouti 170, formant l'élément de renfort mécanique 17, est délimité par le bord arrière 141 de la partie arrière 140 de la jambe de force 14.

L'embouti 170 prend la forme d'une zone polygonale débouchant sur le bord arrière de la partie arrière de la jambe de force 14. Plus précisément, l'embouti 170 prend la forme d'une ellipsoïde débouchant sur le bord arrière 141 de la partie arrière 140 de la jambe de force 14. Il est à noter que l'embouti 170 forme une cavité borgne vue depuis l'habitacle H du véhicule automobile 1. Une pluralité d'emboutis 170 peut être prévue sur la tôle de couverture 11, qu'ils aient leur partie concave côté habitacle H du véhicule automobile ou non. L'embouti 170 permet d'éviter le déchirement de la tôle de couverture 11 en cas de forte sollicitation mécanique.

Par ailleurs, l'élément de doublure intérieure 10 comporte au moins une nervure de rigidification 18 située en arrière de la zone d'amorçage 16 et qui s'étend en direction de la zone d'amorçage 16. Plus particulièrement, la nervure de rigidification 18 est située entre l'embouti 170, décrit précédemment, et la zone d'amorçage 16. La nervure de rigidification 18 est une surépaisseur de la tôle de couverture 11. La nervure de rigidification s'étend de manière rectiligne et présente une longueur non nulle. Plus précisément, la nervure de rigidification 18 s'étend dans la portion supérieure 23 et arrière 22 de l'élément de doublure intérieure 10. La nervure de rigidification 18 est, de préférence, réalisée dans le même matériau que la tôle de couverture 11. Une telle nervure de rigidification 18 permet de rigidifier la tôle de couverture 11 et d'améliorer son comportement, c'est-à-dire sa résistance au déchirement et/ou au flambement, en cas de choc sur l'élément de doublure intérieure 10.

En synthèse, l'invention concerne un élément de doublure intérieure 10 pour véhicule automobile 1 destiné à être fixé solidairement entre un pilier arrière 3 et un pilier central 2 du véhicule automobile 1. L'élément de doublure intérieure 10 comprend une tôle de couverture 11 comportant un rabat supérieur 12, un rabat inférieur 13 et une zone d'amorçage 16 située entre le rabat supérieur 12 et le rabat inférieur 13, la zone d'amorçage 16 prenant la forme d'une forme concave ménagée dans la tôle de couverture 11.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Elément de doublure intérieure (10) pour véhicule automobile (1) destiné à être fixé solidairement entre un pilier arrière (3) et un pilier central (2) du véhicule automobile (1), l'élément de doublure intérieure (10) comportant une tôle de couverture (11) comportant un rabat supérieur (12) destiné à être fixé solidairement à une structure (S) du véhicule automobile (1) s'étendant entre le pilier arrière (3) et le pilier central (2), et un rabat inférieur (13) destiné à être fixé solidairement à un passage de roue (9) du véhicule automobile (1) **caractérisé en ce que** l'élément de doublure intérieure (10) comporte une zone d'amorçage (16) située entre le rabat supérieur (12) et le rabat inférieur (13), la zone d'amorçage (16) prenant la forme d'une forme concave ménagée dans la tôle de couverture (11).

2. Elément de doublure selon la revendication précédente, dans lequel la forme concave comporte au moins une pliure traversant la zone d'amorçage (16).

3. Elément de doublure selon l'une quelconque des revendications précédentes, dans lequel l'élément de doublure intérieure (10) comporte une jambe de force (14) située à une extrémité périphérique de la tôle de couverture (11), la jambe de force (14) comportant un élément de renfort mécanique (17) configuré pour renforcer la tôle de couverture (11) en cas d'effort de traction sur la tôle de couverture (11).

4. Elément de doublure selon la revendication précédente, dans lequel la jambe de force (14) comporte une partie arrière (140) dont un bord arrière (141) forme un angle (A14) non nul avec un bord arrière (142) d'une partie inférieure (143) de la jambe de force (14), la partie inférieure (143) étant destinée à être fixée solidairement au passage de roue (9).

5. Elément de doublure selon la revendication précédente, dans lequel l'élément de renfort mécanique (17) prend la forme d'un embouti (170) ménagé au niveau d'une zone périphérique de la partie arrière (140) de la jambe de force (14).

6. Elément de doublure selon l'une quelconque des revendications précédentes, dans lequel l'élément de doublure intérieure (10) comporte au moins une nervure de rigidification (18) située en arrière de la zone d'amorçage (16) et qui s'étend en direction de ladite zone d'amorçage (16).

7. Véhicule automobile (1) comportant :
- un habitacle (H) délimité latéralement par un pilier central (2) et un pilier arrière (3) situé longitudinalement en arrière du pilier central (2) ;
- un élément de doublure intérieure (10) selon l'une quelconque des revendications précédentes, l'élément de doublure intérieure (10) étant fixé solidairement à une structure (S) du véhicule automobile (1) entre le pilier central (2) et le pilier arrière (3).

8. Véhicule automobile selon la revendication précédente, dans lequel l'élément de doublure intérieure (10) est fixé solidairement :
- à la structure (S) du véhicule automobile (1) par un premier organe de fixation situé au niveau du rabat supérieur (12) ; et
- à un passage de roue (9) du véhicule automobile (1) par un deuxième organe de fixation situé au niveau du rabat inférieur (13).

9. Véhicule automobile selon la revendication précédente, dans lequel la zone d'amorçage (16) est située :
- en dessous d'une vitre arrière du véhicule automobile (1) ; et
- en arrière d'un enrouleur de ceinture de sécurité pour un siège arrière du véhicule automobile (1).

10. Véhicule automobile selon l'une quelconque des revendications 8 ou 9 pris en combinaison avec l'élément de doublure intérieure (10) selon la revendication 3, dans lequel l'élément de doublure intérieure (10) ménage une ouverture (15) au niveau de la structure (S) du véhicule automobile (1) située entre le pilier arrière (3) et le passage de roue (9), l'ouverture (15) étant située en arrière de la jambe de force (14) de l'élément de doublure intérieure (10), la partie inférieure (143) de la jambe de force (14) étant fixée solidairement à une zone arrière du passage de roue (9).

## Patentansprüche

1. Innenfutterelement (10) für ein Kraftfahrzeug (1) zur festen Befestigung zwischen einem hinteren Pfeiler (3) und einem mittleren Pfeiler (2) des Kraftfahrzeugs (1), wobei das Innenfutterelement (10) ein Abdeckblech (11) mit einer oberen Klappe (12) zur festen Befestigung an einer Struktur (S) des Kraftfahrzeugs (1), die sich zwischen dem hinteren Pfeiler (3) und dem mittleren Pfeiler (2) erstreckt, und eine untere Klappe (13) zur festen Befestigung an einem Durchgang aufweist Rad (9) des Kraftfahrzeuges (1), **dadurch gekennzeichnet, dass** das Innenfutter-Element (10) einen zwischen der oberen Klappe (12) und der unteren Klappe (13) liegenden Zündbereich (16) aufweist, wobei der Zündbereich (16) die Form einer konkaven Form im Abdeckblech (11) annimmt.

2. Auskleidungselement nach dem vorhergehenden Anspruch, bei dem die konkave Form wenigstens eine Faltung aufweist, die durch den Anfangsbereich (16) verläuft.

3. Auskleidungselement nach einem der vorhergehenden Ansprüche, bei dem das innere Auskleidungselement (10) einen an einem Umfangsende des Abdeckblechs (11) angeordneten Stützfuß (14) aufweist, wobei der Stützfuß (14) ein mechanisches Verstärkungselement (17) aufweist, das so ausgebildet ist, dass es das Abdeckblech (11) bei Zugkraft auf das Abdeckblech (11) verstärkt.

4. Auskleidungselement nach dem vorhergehenden Anspruch, bei dem der Stützfuß (14) einen hinteren Abschnitt (140) aufweist, dessen hinterer Rand (141) einen Winkel (A14) von nicht Null mit einem hinteren Rand (142) eines unteren Abschnitts (143) des Stützfußes (14) bildet, wobei der untere Abschnitt (143) dazu bestimmt ist, einstückig an dem Radkanal (9) befestigt zu werden.

5. Auskleidungselement nach dem vorhergehenden Anspruch, bei dem das mechanische Verstärkungselement (17) die Form einer Ausstanzung (170) hat, die an einem Umfangsbereich des hinteren Abschnitts (140) des Stützbeins (14) ausgebildet ist.

6. Auskleidungselement nach einem der vorhergehenden Ansprüche, bei dem das innere Auskleidungselement (10) wenigstens eine Versteifungsrippe (18) aufweist, die hinter dem Vorspannbereich (16) angeordnet ist und sich in Richtung auf den Vorspannbereich (16) erstreckt.

7. Kraftfahrzeug (1) mit:
- einem Fahrgastraum (H), der seitlich durch einen mittleren (2) und einen hinteren (3), in Längsrichtung hinter dem mittleren (2), angeordneten Pfeiler begrenzt ist;
- Innenfutterelement (10) nach einem der vorhergehenden Ansprüche, wobei das Innenfutterelement (10) einstückig an einer Struktur (S) des Kraftfahrzeugs (1) zwischen dem mittleren Pfeiler (2) und dem hinteren Pfeiler (3) befestigt ist.

8. Kraftfahrzeug nach dem vorhergehenden Anspruch, bei dem das Innenfutter-Element (10) einstückig befestigt ist:
- am Aufbau (S) des Kraftfahrzeugs (1) durch ein erstes Befestigungsorgan an der oberen Klappe (12) und
- einem Raddurchgang (9) des Kraftfahrzeuges (1) durch ein zweites Befestigungsorgan an der unteren Klappe (13).

9. Kraftfahrzeug nach dem vorhergehenden Anspruch, bei dem die Zündzone (16) angeordnet ist:
- unterhalb einer Heckscheibe des Kraftfahrzeugs (1) und
- hinter einer Sicherheitsgurtaufrolleinrichtung für einen Rücksitz des Kraftfahrzeugs (1).

10. Kraftfahrzeug nach einem der Ansprüche 8 oder 9 in Kombination mit dem Innenfutter-Element (10) nach Anspruch 3, wobei das Innenfutter-Element (10) eine Öffnung (15) an der Struktur (S) des Kraftfahrzeugs (1) zwischen der hinteren Säule (3) und dem Raddurchgang (9) ausbildet, wobei die Öffnung (15) hinter dem Kraftschenkel (14) des Innenfutter-Elements (10), dem unteren Teil, angeordnet ist (143) des Stützbeins (14) fest an einem hinteren Bereich des Radkastens (9) befestigt ist.

## Claims

1. Inner lining element (10) for a motor vehicle (1) intended to be fixed integrally between a rear pillar (3) and a centre pillar (2) of the motor vehicle (1), the inner lining item (10) comprising a coverage sheet (11) comprising an upper flap (12) intended to be fixed integrally to a structure (S) of the motor vehicle (1) extending between the rear pillar (3) and the centre pillar (2), and a lower flap (13) intended to be fixed integrally to a wheel arch (9) of the motor vehicle (1), **characterised in that** the inner lining item (10) comprises a priming zone (16) located between the upper flap (12) and the lower flap (13), the priming zone (16) taking the form of a concave shape provided in the coverage plate (11).

2. Liner element according to the previous claim, in which the concave shape comprises at least one fold passing through the priming zone (16).

3. Lining element according to any one of the previous claims, in which the inner lining item (10) comprises a strut (14) located at a peripheral end of the coverage plate (11), the strut (14) comprising a mechanical reinforcing item (17) configured to reinforce the coverage plate (11) in the event of a tensile force on the coverage plate (11).

4. Lining element according to the previous claim, in which the strut (14) comprises a rear part (140), a rear edge (141) of which forms a non-zero angle (A14) with a rear edge (142) of a lower part (143) of the strut (14), the lower part (143) being intended to be fixed integrally to the wheel arch (9).

5. Lining element according to the previous claim, in which the mechanical reinforcement item (17) takes the shape of a stamped portion (170) provided on the level of a peripheral zone of the rear portion (140) of the support leg (14).

6. Lining element according to any one of the previous claims, in which the inner lining item (10) comprises at least one stiffening rib (18) located at the rear of the priming zone (16) and which extends at the management of the said priming zone (16).

7. Motor vehicle (1) comprising:
- a passenger compartment (H) delimited laterally by a centre pillar (2) and a rear pillar (3) located longitudinally at the rear of the centre pillar (2);
- an inner lining item (10) according to any one of the previous claims, the inner lining item (10) being fixedly attached to a frame (S) of the motor vehicle (1) between the centre pillar (2) and the rear pillar (3).

8. Motor vehicle according to the previous claim, in which the inner lining item (10) is fastened integrally:
to the structure (S) of the motor vehicle (1) by a first fastening member located on the level of the upper flap (12); and
to a wheel arch (9) of the motor vehicle (1) by a second fixing member located on the level of the lower flap (13).

9. Motor vehicle according to the previous claim, in which the priming zone (16) is located:
- under a rear window of the motor vehicle (1); and
- in rear of a safety belt retractor for a motor vehicle rear seat (1).

10. Motor vehicle according to either of Claims 8 and 9 taken in combination with the inner lining item (10) according to Claim 3, in which the inner lining item (10) provides an opening (15) at the level of the motor vehicle frame (S) located between the rear pillar (3) and the wheel arch (9), the opening (15) being located at the rear of the support leg (14) of the inner lining item (10), the lower part (143) of the strut (14) being fixedly attached to a zone rear of the wheel arch (9).
